# EUROPÄISCHE PATENTANMELDUNG

(11) **EP 2 145 938 A1**
(43) Veröffentlichungstag der Anmeldung: **20.01.2010**
(21) Anmeldenummer: 08012680.8
(22) Anmeldetag: 14.07.2008
(51) Int. Cl.: C10G 1/02, C10J 3/00, C10J 3/58, C10B 53/00, C07C 1/00

(54) **Verfahren und Vorrichtung zur Herstellung eins Biokraftstoffes**

(71) Anmelder: Wenger, Jörn, Dr., Avenida Venezuela 2007 Asunción (PY)
(72) Erfinder: Wenger, Jörn, Dr., Avenida Venezuela 2007 Asunción (PY)
(74) Vertreter: Schmitz, Hans-Werner

(57) **Zusammenfassung**

Die Erfindung betrifft ein Verfahren zur Herstellung eines Biokraftstoffes mit folgenden Verfahrensschritten:
- Zubereiten einer zu verarbeitenden Biomasse-Charge (BM);
- Erzeugen von Cracking-Gasen durch druckloses Erhitzen der Biomasse-Charge (BM);
- Hindurchleiten der erzeugten Gase durch von der Biomasse-Charge (BM) getrennte Katalysatoren;
- Verflüssigen der katalytisch behandelten Gase zu einem Destillat;
- Auffangen des Destillats.

## Beschreibung

Die Erfindung betrifft ein Verfahren und eine Vorrichtung zur Herstellung eines Biokraftstoffes gemäß Anspruch 1 bzw. gemäß dem Oberbegriff des Anspruches 7.

Bei bisher bekannten Verfahren und Vorrichtungen zur Herstellung von Biokraftstoffen, die auch als Bio-Erdöl bezeichnet werden, wird in einem Reaktor eine Biomasse-Charge, die aus Biomasse und organischen Reststoffen bestehen kann, mit einem Wärmeträger und Öl gemischt. In diese Mischung werden Katalysatoren eingegeben und das entstehende Gas wird über ein Kühlsystem destilliert, wodurch der synthetische Bio-Kraftstoff entsteht.

Im Rahmen der Erfindung durchgeführte Untersuchungen haben jedoch ergeben, dass dieses Vorgehen insofern nachteilig ist, als es für die Erzeugung einer ökonomisch sinnvollen Ausbeute erforderlich ist, den Reaktor als Druckbehälter auszubilden, in dem der katalytische Umwandlungsprozess unter einem gegenüber dem Umgebungsdruck deutlich erhöhten Druck erfolgen muss.

Ferner ergeben sich insofern Nachteile, als die Katalysatoren in die zu verarbeitende Biomasse eingebracht werden, was zu Verunreinigungen des entstehenden Destillats als auch zu starken Verunreinigungen der Katalysatoren führt, so dass diese nach relativ wenigen Prozesszyklen erneuert werden müssen.

Es ist demgegenüber Aufgabe der vorliegenden Erfindung, ein Verfahren und eine Vorrichtung zur Herstellung eines Biokraftstoffes zu schaffen, wobei es ermöglicht werden soll, die Herstellungsvorrichtung in ihren technischen Komponenten einfacher aufzubauen und dennoch eine sowohl quantitative als auch qualitative Verbesserung der Ausbeute des herzustellenden Biokraftstoffes zu erreichen.

Hinsichtlich des erfindungsgemäßen Verfahrens erfolgt die Lösung dieser Aufgabe durch die Merkmale des Anspruches 1 und hinsichtlich der erfindungsgemäßen Vorrichtung durch die Merkmale des Anspruches 7.

Die Unteransprüche 2 bis 6 haben vorteilhafte Weiterbildungen des erfindungsgemäßen Verfahrens, und die Ansprüche 8 bis 16 haben vorteilhafte Weiterbildungen der erfindungsgemäßen Vorrichtung zum Inhalt.

So haben die im Rahmen der Erfindung durchgeführten Untersuchungen ergeben, dass es möglich ist, die vorbereitete Biomasse-Charge zur Erzeugung von Cracking-Gasen drucklos zu erhitzen, also den Erhitzungsvorgang unter Umgebungsdruck auszuführen, falls die dann erzeugten Gase über Katalysatoren geleitet werden, die außerhalb der Biomasse-Charge vorgesehen sind. Hierdurch ergibt sich zunächst der Vorteil, dass es für die erfindungsgemäße Vorrichtung möglich ist, einen gegenüber bekannten Konstruktionen einfach aufgebauten, insbesondere dünnwandigen, Reaktor verwenden zu können, der technisch einfacher und damit kostengünstiger herstellbar ist, da es mit dem erfindungsgemäßen Verfahren nicht nötig ist, den Umwandlungsprozess unter erhöhtem Druck durchzuführen.

Darüber hinaus ergibt sich der Vorteil, dass die Katalysatoren wesentlich weniger verschmutzt werden, da lediglich die erzeugten Gase und nicht die gesamte Biomasse-Charge mit den Katalysatoren in Berührung kommen.

Dies wiederum ergibt die Möglichkeit, dass die Katalysatoren, gegebenenfalls nach Durchführung eines Reinigungsprozesses, wiederverwendbar sind, wozu zur Reinigung der Katalysatoren diese lediglich auf eine Reinigungstemperatur erhitzt werden müssen, die höher liegt, als die höchste Prozesstemperatur.

Besonders vorteilhafte Ergebnisse haben sich ergeben, wenn die Erhitzung der Biomasse-Charge in drei Schritten erfolgt. Hierzu wird zunächst eine erste niedrigste Prozesstemperatur eingestellt, die für eine vorbestimmbare Zeitspanne aufrechterhalten wird, innerhalb der noch vorhandenes Restwasser verdampft und in der Kühleinrichtung destilliert und danach aufgefangen und entfernt wird.

In der zweiten Phase wird eine zweite mittlere Prozesstemperatur eingestellt, wonach auf die dritte höchste Prozesstemperatur für eine vorbestimmbare Zeitspanne heraufgefahren wird, innerhalb der der erfindungsgemäße Cracking- und Pyrolyse-Prozess erfolgt. Durch das stufenweise Hochfahren der Temperatur ergibt sich der Vorteil, dass eine zu schnelle Erhitzung der Biomasse-Charge vermieden werden kann, so dass genügend Zeit für den erfindungsgemäßen Cracking-Pyrolyse-Prozess mit anschließender katalytischer Verflüssigung der anfallenden Gase verbleibt.

Hierfür hat es sich ferner als vorteilhaft herausgestellt, wenn die Katalysatoren in zumindest drei hintereinander geschaltete Katalyse-Abschnitte bzw. Katalysator-Stufen unterteilt werden. Der in Strömungsrichtung der erzeugten Gase gesehene erste und letzte Katalyse-Abschnitt wird hierbei gleichzeitig mit der Erhitzung der Biomasse-Charge erwärmt, wohingegen der zwischen diesen angeordnete Katalyse-Abschnitt keiner Erwärmung unterzogen wird.

Dadurch wird erreicht, dass die aus dem Reaktor der erfindungsgemäßen Vorrichtung entweichende Cracking-Gase, die eine relativ hohe Temperatur besitzen, auf den ersten Katalyse-Abschnitt auftreffen, wodurch die leichteren Gasanteile in den darauffolgenden nicht erwärmten Katalyse-Abschnitt einströmen. Dadurch werden diese abgekühlten Gasanteile wieder in den zuerst durchströmten erhitzten Katalyse-Abschnitt zurückbefördert, so dass sich eine hin- und hergehende Strömung dieser Gase zwischen dem ersten erhitzten und dem darauffolgenden nicht erwärmten Katalyse-Abschnitt ergeben, bis diese Gasanteile (und gegebenenfalls weitere Gase) aufgrund der im Reaktor höher werdenden Temperatur dann in den dritten erwärmten Katalyse-Abschnitt einströmen, was die Erzeugung eines qualitativ höherwertigen Destillates ermöglicht.

Zur Zubereitung der zu verarbeitenden Biomasse-Charge haben sich Mischungen aus Trockenbiomasse (wie z.B. Stroh, bei der Herstellung von Kokosöl anfallende Kokosschnitzel oder ähnliche Biorestprodukte) mit organischen Reststoffen, wie insbesondere pflanzliche Öle, und ein Trägeröl als besonders vorteilhaft herausgestellt.

Als pflanzliche Öle können beispielsweise alte Restöle, wie alte Speiseöle oder ranzige und braune Kokosöle, verwendet werden.

Als Trägeröl (Wärmeträgeröl) hat sich als besonders vorteilhaft die Verwendung von gebrauchtem Mineralöl, insbesondere in Form von gebrauchtem KFZ-Motorenöl herausgestellt.

Ferner hat sich zur Erhöhung der Effizienz des erfindungsgemäßen Verfahrens die Zugabe von Schwefelsäure zur Biomasse-Charge herausgestellt.

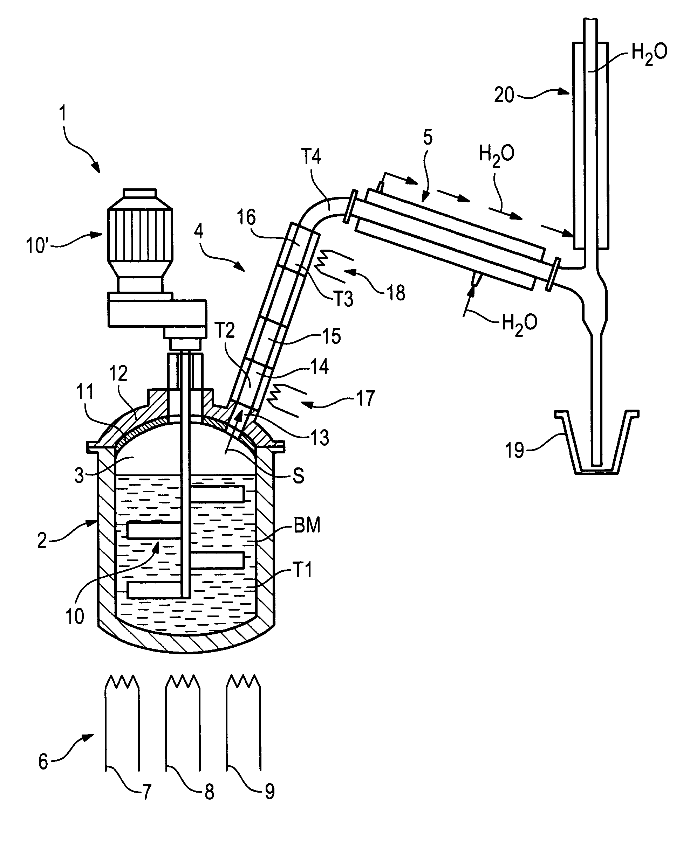

Weitere Einzelheiten, Vorteile und Merkmale der vorliegenden Erfindung, insbesondere der erfindungsgemäßen Vorrichtung, ergeben sich aus nachfolgender Beschreibung eines Ausführungsbeispiels anhand der Zeichnung.

Die einzige Figur der Zeichnung zeigt eine schematisch stark vereinfachte Darstellung einer erfindungsgemäßen Vorrichtung 1 zur Herstellung von Biokraftstoffen.

Die Vorrichtung 1 weist einen Reaktor 2 auf, der einen Reaktorraum 3 zur Aufnahme einer Biomasse-Charge BM umfasst.

Der Reaktor 2 ist mit einem Deckel 12 versehen, der vom Reaktor 2 abgenommen werden kann und der mit einer hitzebeständigen erneuerbaren Dichtungsschicht 11 versehen werden kann, die nach einer Mehrzahl von Prozessen von der Innenwand des Deckels 12 entfernt und erneuert werden kann.

Im Reaktorraum 3 ist ein Rührwerk 10 angeordnet, das über eine Antriebseinrichtung 10', wie beispielsweise einen elektromotorischen Antrieb, betätigt werden kann. Der elektromotorische Antrieb 10' ist hierbei außerhalb des Reaktorraums 3 angeordnet, was sich im Einzelnen aus der zeichnerischen Darstellung der erfindungsgemäßen Vorrichtung ergibt.

Die Vorrichtung 1 weist ferner eine Heizeinrichtung 6 für den Reaktor 2 auf, die im Beispielsfalle drei Heizstufen 7, 8 und 9 umfasst, die in der eingangs erläuterten Art und Weise zur schrittweisen Erhöhung der Prozesstemperatur betätigt werden können.

Die erfindungsgemäße Vorrichtung 1 weist ferner eine Katalysator-Einrichtung 4 auf. Die Katalysator-Einrichtung 4 ist, wie aus der Figur ersichtlich, außerhalb des Reaktorraums 3 angeordnet, wozu bei der in der Figur dargestellten besonders bevorzugten Ausführungsform der Deckel 12 mit einer Durchtrittsöffnung 13 versehen ist, die eine Strömungsverbindung zwischen dem Reaktorraum 3 und der Katalysator-Einrichtung 4 ermöglicht. In der Katalysator-Einrichtung 4 sind Katalysatoren angeordnet, die in der Figur nicht näher dargestellt sind, über die die während der Erwärmung dieser Biomasse-Charge BM erzeugten Gase geleitet werden können, um den erfindungsgemäßen katalytischen Cracking-Pyrolyse-Prozess durchführen zu können.

Bei der in der Figur dargestellten besonders bevorzugten Ausführungsform weist die Katalysator-Einrichtung 4 drei Katalysator-Stufen 14, 15 und 16 auf, die in Strömungsrichtung S der erzeugten Gase hintereinander angeordnet sind. Die bei der dargestellten Ausführungsform erste Katalysator-Stufe 14 schließt sich unmittelbar an den Deckel 12 des Reaktors 2 auf und ist mit einer zugeordneten separat betätigbaren Heizeinrichtung 17 versehen. Die sich in Strömungsrichtung S an die erste Katalysator-Stufe 14 anschließende zweite Katalysator-Stufe 15 ist unbeheizt. Die dritte Katalysator-Stufe 16 ist wiederum mit einer separat betätigbaren Heizeinrichtung 18 versehen, so dass die Katalysator-Stufe 14 und die Katalysator-Stufe 16 auf jeweils zugeordnete Temperaturniveaus T2 bzw. T3 aufgeheizt werden können, die üblicherweise niedriger liegen als die höchste Prozesstemperatur, die in der Figur mit der Bezugsziffer T1 verdeutlicht ist.

In Strömungsrichtung S anschließend an die Katalysator-Einrichtung 4 schließt sich eine Kühleinrichtung 5 an, in die die durch die Katalysator-Einrichtung 4 hindurchgeleiteten Gase zur Destillation eingeleitet werden können, wobei die Gase die in der Figur eingezeichnete Temperatur T4 annehmen, die sich aus der jeweils eingestellten Prozesstemperatur T1 und dem Temperaturen T2 und T3 ergibt.

Die Kühleinrichtung 5 kann als einfach aufgebaute Kühlschlange ausgebildet sein, die zur Kühlung der Gase von Wasser durchströmt ist.

Die Kühleinrichtung 5 mündet in einen Auffangbehälter 19 und ist bei der in der Figur besonders bevorzugten Ausführungsform zusätzlich mit einem aufrecht stehenden Sicherheitsrohr 20 versehen, das ebenfalls als von Wasser durchströmte Kühlschlange ausgebildet sein kann und das zur Umgebung hin, im Beispielsfalle oben, offen ist. Dieses Sicherheitsrohr ermöglicht die Verhinderung von Druckstößen.

Erfindungsgemäß ist es ferner möglich, dass sowohl der Reaktor 2 als auch die Katalysator-Einrichtung 4 mit einer Wärmedämmung, insbesondere mit einer Steinwolleschicht umgeben sind, die in der Figur jedoch nicht gezeigt ist.

Sämtliche regelbaren Komponenten, wie insbesondere die Heizeinrichtungen 6, 17 und 18 sowie das Rührwerk 10 mit seiner Antriebseinrichtung 10' können natürlich mit geeigneten Regeleinrichtungen versehen sein, die in der Figur jedoch nicht näher dargestellt sind, da diese Darstellung für die Erläuterung der erfindungsgemäßen Prinzipien nicht erforderlich ist.

Neben der voranstehenden schriftlichen Offenbarung der Erfindung wird hiermit explizit auf deren zeichnerische Darstellung in der Figur Bezug genommen.

### Bezugszeichenliste

- 1: Vorrichtung zur Herstellung von Biokraftstoff
- 2: Reaktor
- 3: Reaktorinnenraum
- 4: Katalysator-Einrichtung
- 5: Kühleinrichtung
- 6: Heizeinrichtung
- 7-9: Heizstufen der Heizeinrichtung 6
- 10: Rührwerk
- 10': Antriebsvorrichtung des Rührwerks 10
- 11: Erneuerbare Dichtung
- 12: Deckel des Reaktors 2
- 13: Durchtrittsöffnung im Deckel 12
- 14-16: Katalysator-Stufen / Katalyse-Abschnitte
- 17, 18: Heizeinrichtungen
- 19: Auffangbehälter
- 20: Sicherheitsrohr
- T1-T4: Prozesstemperaturen
- S: Strömungsrichtung der erzeugten Gase

## Patentansprüche

1. Verfahren zur Herstellung eines Biokraftstoffes mit folgenden Verfahrensschritten:
- Zubereiten einer zu verarbeitenden Biomasse-Charge (BM);
- Erzeugen von Cracking-Gasen durch druckloses Erhitzen der Biomasse-Charge (BM);
- Hindurchleiten der erzeugten Gase durch von der Biomasse-Charge (BM) getrennte Katalysatoren;
- Verflüssigen der katalytisch behandelten Gase zu einem Destillat;
- Auffangen des Destillats.

2. Verfahren nach Anspruch 1, **dadurch gekennzeichnet, dass** das Erhitzen der Biomasse-Charge (BM) in drei Schritten von einer ersten niedrigsten Prozesstemperatur auf eine zweite mittlere Prozesstemperatur und danach auf eine dritte höchste Prozesstemperatur erfolgt.

3. Verfahren nach Anspruch 1 oder 2, **dadurch gekennzeichnet, dass** die Katalysatoren in zumindest drei Katalysator-Stufen unterteilt sind, von denen die in Strömungsrichtung (S) der erzeugten Gase gesehen, erste und letzte Katalysator-Stufe (14, 16) gleichzeitig mit der Erhitzung der Biomasse-Charge (BM) erwärmt werden, während die zwischen diesen angeordnete Katalysator-Stufe (15) unerwärmt bleibt.

4. Verfahren nach einem der Ansprüche 1 bis 3, **dadurch gekennzeichnet, dass** zur Zubereitung der Biomasse-Charge (BM) Trockenbiomasse mit organischen Reststoffen, insbesondere pflanzliche Öle, und einem Trägeröl gemischt wird.

5. Verfahren nach einem der Ansprüche 1 bis 4, **dadurch gekennzeichnet, dass** der Biomasse-Charge (BM) Schwefelsäure zugegeben wird.

6. Verfahren nach einem der Ansprüche 1 bis 5, **dadurch gekennzeichnet, dass** die gebrauchten Katalysatoren durch Erhitzen auf eine vorbestimmbare Reinigungstemperatur, die höher als die höchste dritte Prozesstemperatur, zumindest einmal wiederaufbereitet werden.

7. Vorrichtung (1) zur Herstellung eines Biokraftstoffes
- mit einem Reaktor (2), der einen Reaktorinnenraum (3) zur Aufnahme einer Biomasse-Charge (BM) aufweist;
- mit einer Katalysator-Einrichtung (4); und
- mit einer Kühleinrichtung (5),
**dadurch gekennzeichnet,**
- **dass** die Katalysator-Einrichtung (4) außerhalb des Reaktorinnenraums (3) angeordnet ist.

8. Vorrichtung nach Anspruch 1, **dadurch gekennzeichnet, dass** der Reaktor (2) mit einer Heizeinrichtung (6) versehen ist.

9. Vorrichtung nach Anspruch 8, **dadurch gekennzeichnet, dass** die Heizeinrichtung (6) drei Heizstufen (7, 8, 9) aufweist.

10. Vorrichtung nach einem der Ansprüche 7 bis 9, **dadurch gekennzeichnet, dass** im Reaktorinnenraum (3) ein Rührwerk (10) angeordnet ist.

11. Vorrichtung nach einem der Ansprüche 7 bis 10, **dadurch gekennzeichnet, dass** der Reaktor (2) einen mit einer hitzebeständigen, erneuerbaren Dichtung (11) versehbaren Deckel (12) aufweist.

12. Vorrichtung nach Anspruch 11, **dadurch gekennzeichnet, dass** der Deckel (12) eine Öffnung (13) aufweist, über die der Reaktorinnenraum (3) mit der Katalysator-Einrichtung (4) in Strömungsverbindung steht.

13. Vorrichtung nach einem der Ansprüche 7 bis 12, **dadurch gekennzeichnet, dass** die Katalysator-Einrichtung (4) zumindest drei Katalysator-Stufen (14-16) aufweist, die, in Strömungsrichtung (S) der erzeugten Gase gesehen, hintereinander angeordnet sind.

14. Vorrichtung nach Anspruch 13, **dadurch gekennzeichnet, dass** die, in Strömungsrichtung (S) der erzeugten Gase gesehen, erste Katalysator-Stufe (14) und letzte Katalysator-Stufe (16) jeweils mit einer separat betätigbaren Heizeinrichtung (17 bzw. 18) versehen ist.

15. Vorrichtung nach einem der Ansprüche 7 bis 14, **dadurch gekennzeichnet, dass** sich, in Strömungsrichtung (S) der erzeugten Gase gesehen, die Kühleinrichtung (5) an die Katalysator-Einrichtung (4) anschließt, in einen Auffangbehälter (19) mündet und mit einem gekühlten aufrecht stehenden Sicherheitsrohr (20) versehen ist.

16. Vorrichtung nach einem der Ansprüche 7 bis 15, **dadurch gekennzeichnet, dass** der Reaktor (2) und die Katalysator-Einrichtung (4) mit einer Wärmedämmung versehen sind.
